Europäisches Patentamt

European Patent Office

Office européen des brevets

(19)

(11) Veröffentlichungsnummer: **0 120 310**
**B1**

(12) **EUROPÄISCHE PATENTSCHRIFT**

(45) Veröffentlichungstag der Patentschrift: **23.05.90**

(21) Anmeldenummer: **84101953.2**

(22) Anmeldetag: **24.02.84**

(51) Int. Cl.⁵: **H 01 S 3/13**, H 01 S 3/10,
H 01 S 3/086

(54) Verfahren, Einrichtung und Schaltungsanordnung zur Kompensation von betriebs- und/oder umweltbedingten Dejustierungen von Laserresonatoren in gefalteter Anordnung.

(30) Priorität: **24.02.83 DD 248226**

(43) Veröffentlichungstag der Anmeldung:
**03.10.84 Patentblatt 84/40**

(45) Bekanntmachung des Hinweises auf die
Patenterteilung:
**23.05.90 Patentblatt 90/21**

(84) Benannte Vertragsstaaten:
**AT BE CH DE FR GB IT LI NL SE**

(56) Entgegenhaltungen:
CA-A-1 139 869
US-A-4 245 195

SOVIET JOURNAL OF QUANTUM
ELECTRONICS, Band 1, Nr. 2, Septeber-Oktober
1971, Seiten 140-145, New York, US; G.V.
GALUTVA et al.: "Gas-laser resonator stabilized
by thermal compensation"

(73) Patentinhaber: **VEB Kombinat Feinmechanische
Werke Halle
Rudolf-Breitscheid-Strasse 71
DDR-4020 Halle (DD)**

(72) Erfinder: **Pöhler, Manfred, Dr.
Block 218/8
Halle-Neustadt (DD)**
Erfinder: **Henschler, Detlef
Block 366/3
Halle-Neustadt (DD)**
Erfinder: **Wittig, Richard, Dipl.-Phys.
Röderberg 2
Halle (DD)**

(74) Vertreter: **Spott, Gottfried, Dr.
Patentanwälte Spott und Puschmann
Sendlinger-Tor-Platz 11
D-8000 München 2 (DE)**

Courier Press, Leamington Spa, England.

## Beschreibung

Die Erfindung betrifft ein Verfahren nebst zugehöriger Einrichtung und Schaltungsanordnung zur Kompensation von betriebs- und/oder umweltbedingten. Dejustierungen von Laserresonatoren in gefalteter Anordnung unter Verwendung einer Trägerkonstruktion für den Resonator in Form einer in Leichtbauweise ausgeführten, vorzugsweise senkrecht angeordneten Doppel-T-Profiles.

Gegenwärtig werden CO2-Laserresonatoren mit langsamen Gasdurchfluß im Leistungsbereich bis zu 1000 Watt aus teuren, thermostabilisierten Invarkonstruktionen gebaut. Teilweise werden sogar neuartige Materialien wie bspw. Superinvar als Konstruktionsmaterial eingesetzt. Außerdem wurde schon versucht, als stabile Auflage für die optischen Bauelemente des Laserresonators massive Marmorblöcke zu verwenden. Alle diese Konstruktionen erfüllen zwar die optischen Anforderungen, sie sind jedoch sehr teuer und weisen für einen industriellen Einsatz viel zu große Massen und Dimensionen auf, die außerdem eine weitere Steigerung der Laserausgangsleistung nicht mehr wirtschaftlich sinnvoll erscheinen lassen. Andererseits haben sich die entwickelten Lasertechnologien insbesondere unter Verwendung von CO2-Lasern beim industriellen Einsatz hervorragend bewährt, so daß immer stärkere Forderungen hinsichtlich der Gewichts- und der Volumenreduzierung gestellt werden, aus deren Erfüllung sich wiederum neue Anforderungen an die Laserresonatoren und deren Klimastabilisierung ergeben. Um die Baulänge zu reduzieren, sind gefaltete Resonatoranordnungen entwickelt worden, die jedoch gegenüber den o. a. Resonatorkonstruktionen wesentlich klimaempfindlicher sind und damit die Möglichkeiten des industriellen Einsatzes ebenfalls einschränken. Durch zusätzliche wärmestabilisierende Maßnahmen an den Resonatorkonstruktionen unter Verwendung von Wasser, Öl und Klimaisolationsmaßnahmen wurde versucht, diesen Nachteil auszugleichen, was jedoch nur zum Teil, d.h. nach wie vor mit einer Reduzierung des Klimaeinsatzbereiches erreicht wurde. Hinzu kommt, daß die beschriebenen Maßnahmen wiederum eine Erhöhung der Masse und des Volumens und damit naturgemäße auch der Kosten nach sich zogen.

Um diese Nachteile zu umgehen, wurde auch schon vorgeschlagen, unter Verwendung kostengünstiger Materialien als Trägerkonstruktion für den Laserresonator ein in Leichtbauweise ausgeführtes Doppel-T-Profil zu verwenden, Derartige Konstruktionen haben sich bisher jedoch nicht durchsetzen können, da bei den dazu verwendeten Materialen (Aluminium, Stahlblech) bei umwelt- und betriebsbedingten Klimaeinwirkungen bereits bei einer Temperaturänderung von nur einem Grad C beträchtliche Dejustierungen des Laserresonators auftreten, so daß dadurch die Strahlqualität und die Laserausgangsleistung so vermindert werden, daß eine den zu stellenden Qualitätsanforderungen genügende Materialbearbeitung nicht mehr gewährleistet werden kann. Eine Abschirmung derartiger Klimaeinflüsse bzw. Temperaturschwankungen ist weder durch aufwendige Isolationsmaßnahmen, noch durch betriebsbedingte Stabilisierung der Kühlwassertemperatur, Stabilisierung der eingespeisten elektrischen Energie oder dgl. mit hinreichendem Erfolg erreichbar. Daraus folgt, daß die für einen Einsatz derartiger Laser zwangsläufig zu stellenden Anforderungen in der Klimastabilität nur mit unvertretbar hohen Kosten erreichbar wären und damit in einem hohen Maße unwirtschaftlich erscheinen, bzw. die durch die Leichtbauweise erzielten Vorteile bei weitem wieder wettmachen.

Es ist Ziel der Erfindung, ein Verfahren zur Kompensation von betriebs- und/oder umweltbedingten Dejustierungen von Laserresonatoren in gefalteter Anordnung mit zugehöriger Einrichtung und Schaltungsanordnung zu entwickeln, mit dessen Einsatz die vorbeschriebenen Nachteile weitgehend vermieden werden und das den Aufbau von kostengünstigen, leistungsfähigen Lasern der genannten Art mit wesentlich reduzierter Masse und reduziertem Volumen bei wesentlich vermindertem Materialeinsatz gestattet, die gleichzeitig den zu stellenden Anforderungen an die Klimabeständigkeit beim industriellen Einsatz genügen.

Der Erfindung liegt die Aufgabe zugrunde, ein Verfahren zum Kompensation von betriebs- und/oder umweltbedingten Dejustierungen von Laserresonatoren in gefalteter Anordnung mit zugehöriger Einrichtung und Schaltungsanordnung zu entwickeln, das den Bau von Laserresonatoren in gefalteter Anordnung in Leichtbauweise unter Verwendung kostengünstiger Materialien gestattet, das klimabedingte Dejustierungen durch entsprechende Nachstellung der optischen Bauelemente mit einfachen Mitteln und mit hoher Präzision ausgleicht und dadurch über einen beim industriellen Einsatz normalerweise geforderten Klimabereich eine hohe Strahlqualität garantiert und damit auch den zu stellenden Forderungen bei der Materialbearbeitung vollauf genügt.

Gemäß der Erfindung wird diese Aufgabe mit Hilfe eines Verfahrens nebst zugehöriger Einrichtung und Schaltungsanordung gelöst, indem zunächst für den gefaltet angeordneten Laserresonator als Trägerkonstruktion ein in Leichtbauweise ausgeführtes, vorzugsweise senkrecht angeordnetes Doppel-T-Profil verwendet wird. Das Verfahren gemäß der Erfindung zeichnet sich dadurch aus, daß zur Kompensation betriebs- und/oder umweltbedingter Dejustierungen des Laserresonators des durch die Halterungen bzw. Aufnahmen aller optischen Bauelemente fließenden, an sich zur Wärmestabilisierung dienende Medium (Wasser, Öl oder dgl.) von einer Vorlauf- bzw. Normaltemperatur TN auf ein definiert höheres Temperaturniveau TA gebracht und als Stellmedium für die optischen Bauelemente ausgenutzt wird. Dazu werden die optischen Bauelemente (Umlenkspiegel, Strahlauskoppelscheibe) jeweils auf einer aus Materialien mit unterschiedlichem Wärmeausdehnungskoeffizienten bestehenden Dreipunktauflage angeordnet, die bei der Ausgangstemperatur TA genau justiert ist. Auftretende Dejustierungen des Lasers und/oder die die Dejustierungen verursachenden Faktoren, insbesondere im Doppel-T-Profil der Resonatorkonstruktion auftretende Temperaturgradienten, werden dabei sowohl in der Einlaufphase des Lasers nach dem Start, als auch im stationären Zustand in geeigneter Form erfaßt, über eine geeignete Regeleinrichtung ausgewertet und als Führungsgröße für das Stellmedium, bspw. Wasser, definiert. Das geschieht so, daß die Temperatur des Stellmediums ausgehend von der Temperatur TA bestimmten Arbeitspunkt je nach der vorliegenden Dejustierungsrichtung erhöht oder vermindert wird, so daß bei auftretenden Dejustierungen und der daraus folgenden definierten Änderung der Temperatur des durch die jeweiligen Aufnahmen fließenden Stellmediums durch die unterschiedliche Längenausdehnung der jeweiligen Dreipunktauflagen die Position aller optischen Bauelemente im erforderliche Umfang nachgestellt und die jeweils vorliegende Dejustierung mit hoher Genauigkeit kompensiert wird. Zur Durchführung des Verfahrens gemäß der Erfindung werden die optischen Bauelemente, insbesondere die Umlenkspiegel, die nicht in Umlenkprismen angeordnet sind, auf einer Dreipunktauflage gelagert, die vorzugsweise ein gleichseitiges Dreieck bildet. Dieses Dreieck, bzw. die die Eckpunkte dieses Dreiecks bildenden Auflagestifte, ist dabei so angeordnet, daß seine Basis, die gleichzeitig als Kippachse bei der Oberstellung dient, waagerecht und parallel zur Ober- bzw. Unterkante des Doppel-T-Profiles verläuft. Die zugehörigen Dreipunktauflagen bestehen dazu aus thermojustierbaren Stiften höchster Präzision aus Materialien mit unterschiedlichem Wärmeausdehnungskoeffizienten mit definierten Abmessungen. Dabei sind die Auflagestifte, die die Nachjustierungen bewirken, in sogenannter Spielpassung in ihre Halterungen eingepaßt und in geeigneter Weise gegen Verdrehung gesichert, während die jeweils restlichen Auflagestifte aus dem gleichen Material wie die jeweils zugehörigen Aufnahmen bestehen und jeweils fest in diese eingepaßt sind. Die Stellung der Auflagestifte ist dabei so, daß die in Spielpassung eingepaßten Stifte, die die Nachjustierung bewirken der jeweiligen waagerechten Kippachse, deren Endpunkte durch die fest eingepaßten Stifte gebildet werden, gegenüber liegen und zwar oben oder unten in abhängigkeit davon, ob der Wärmeausdehnungskoeffizient des jeweiligen Auflagestiftes kleiner oder größer als der der fest eingepaßten Stifte ist.

Bei der Einrichtung zur Kompensation temperaturbedingter Änderungen des Strahlumlenkwinkels der zur Faltung des Laserstrahles erforderlichen Strahlumlenkprismen werden die an den zugehörigen Strahlumlenkflächen angeordneten, genau justierten Spiegel ebenfalls auf Dreipunktauflagen aus Stiften mit unterschiedlichem Wärmeausdehnungskoeffizienten aufgelegt. Dabei bilden diese Dreipunktauflagen ebenfalls ein vorzugsweise gleichseitiges Dreieck, deren jeweils zugehörige Basis zueinander alternative oben oder unten parallel zu den Längskanten der Strahlumlenkflächen verläuft, so daß sich beide Dreiecke um 180 Grad gegeneinander verdreht gegenüberstehen, Zur Korrektur des Strahlumlenkwinkels werden die die Nachjustierung bewirkenden Stifte in Abhängigkeit von der jeweils vorliegenden Relation der Wärmeausdehnungskoeffizienten paarweise entweder an den äußeren oder inneren Basispunkten der zugehörigen Dreiecke angeordnet, so daß sich beidseitig zwei parallel verlaufende Kippachsen mit einem Winkel von vorzugsweise 30 Grad zur Achse des Strahlumlenkprismas ergeben. Mit dieser Anordnung wird mit der definierten Änderung der Temperatur des Stellmediums, bspw. Wasser, neben der genauen Nachjustierung des Strahlumlenkwinkels auch der bei nur einseitiger Nachstellung auftretenden Höhenfehler durch die mit der Korrektur verbundene, nahezu gleichgroße, gegenläufige Höhenverstellung beider Spiegel voll kompensiert. Bei einer gleichzeitigen klimabedingten Kippung des gesamten Strahlumlenkprismas am Resonator bei horizontaler Anordnung des Strahlumlenkprismas, die eine vertikale Dejustierung des Lasers verursachen würde, wird einer der den Basen der vorliegenden Drecke gegenüberliegenden Stifte zur Nachstellung ausgenutzt. Dieser Stift, der aus einem Material mit gegenüber den anderen Stiften unterschiedlichem Wärmeausdehnungskoeffizienten besteht, wird ebenfalls in Spielpassung eingepaßt und bewirkt mit der angeführten, definierten Änderung der Temperatur des Stellmediums gleichlaufend mit der beschriebenen Winkelkorrektur eine ausreichende Kompensation der aufgetretenen Höhenabweichung.

Zur Nachjustierung der am Resonator angeordneten Strahlungsauskopplungsoptik, die zunächst mittels drei geeigneter Justierschrauben, bspw. Mikrometerschrauben, entsprechend eingestellt werden kann, werden diese Justierschrauben in Aufnahmekörper aus Materialien mit unterschiedlichem Wärmeausdehnungskoeffizienten eingesetzt. Die Justierschrauben bilden dazu einen rechten Winkel, dessen einer Schenkel senkrecht, und dessen anderer Schenkel parallel zur Ober- bzw. Unterkante des Doppel-T-Trägers verläuft, wobei beide Schenkel als Kippachsen für die waagerechte bzw. senkrechte Nachjustierung dienen. Dabei wird nur der Aufnahmekörper zur Aufnahme der Justierschraube zur senkrechten Justierung, der am Endpunkt des senkrecht verlaufenden Schenkels liegt, vom Stellmedium, bspw. Wasser, durchflossen, so daß mit der Temperaturänderung des Stellmediums in erster Linie klimabedingte, senkrechte Dejustierungen ausgeglichen werden. Die beiden anderen Aufnahmen können gleichfalls aus Materialien mit unterschiedlichem Wärmeausdehnungskoeffizienten bestehen, ohne jedoch vom vorliegenden Stellmedium durchflossen zu werden, so daß durch Raumtemperaturänderungen eventuell verursachte, geringfügige seitliche Dejustierungen gleichfalls selbsttätig ausgeglichen werden.

Zur Erfassung von Temperaturgradienten, wie sie durch klima- und/oder betriebsbedingte Temperaturänderungen im Doppel-T-Profil des Resonanzkonstruktion auftreten können, werden an der oberen und der unteren Deckfläche des Doppel-T-Profiles geeignete Meßfühler, bspw. Thermistoren, angeordnet. Die Erfassung kann dabei sowohl in der Einfahrphase des Lasers nach dem Start, als auch im stationären Betrieb erfolgen. Zur Erfassung eines vorliegenden senkrechten Temperaturgradienten wird dazu mindestens je ein Meßfühler oben und unten, oder ein Meßfühler oben und unten symmetrisch zur Trägermittelachse angeordnet. Zur zusätzlichen Erfassung eines gegebenenfalls außerdem vorliegenden waagerechten Temperaturgradienten im Doppel-T-Profil wird mindestens je ein weiteres Meßfühlerpaar in entsprechender Entfernung ebenfalls oben und unten und ebenfalls symmetrisch zur Trägermittelachse angeordnet. Dabei ist es naturgemäß auch möglich, jeweils mehrere Meßfühlerpaare oben und unten und ebengalls symmetrisch zur Trägermittelachse in regelmäßigen Abständen über die gesamte Länge des Doppel-T-Profiles zu verteilen. Zur Auswertung werden die oberen bzw. unteren Meßfühler so abgeglichen, daß sie bei der Temperatur TA des Stellmediums, bspw. Wasser, das Differenzsignal Null liefert, während bei vorliegendem Temperaturgradienten im Doppel-T-Profil der Resonatorkonstruktion die Differenz der Meßsignale aus dem oberem und dem unteren Meßfühler bzw. aus den Reihenschaltungen der oberen und unteren Meßfühler ein Maß für den jeweils vorliegenden Temperaturgradienten im Doppel-T-Profil darstellt und dieses Differenzsignal als Führungsgröße für das verwendete Stellmedium dient.

Zur direkten Erfassung vorliegender Laser-Dejustierungen im stationären Betrieb werden an der Strahlungsauskopplungsoptik zwei geeignete Meßfühler, bspw. Thermoelemente, so angeordnet, daß sie am Umfang des Laserstrahles oberhalb und unterhalb senkrecht übereinander liegen. Die Meßfühler sind dabei gegensinnig so in Reihe geschaltet, daß bei ideal justiertem Laser ein Differenzsignal Null geliefert wird, während sowohl bei senkrechter Abweichung des Laserstrahles, als auch bei Änderung der Intensitätsverteilung im Lasersignal ein Differenzsignal entsteht, dessen zugehörige Polarität ein Maß für die vorliegende senkrechte Dejustierungsrichtung und dessen Größe ein Maß für den vorliegenden Dejustierungsgrad darstellt, und das gleichfalls als Führungsgröße für die Temperatur des verwendeten Stellmediums dienen kann.

Die Schaltungsanordnung zur Durchführung des Verfahrens besteht aus den nachfolgend aufgeführten Baugruppen:

—einem Thyristorsteller mit nachgeschaltetem Durchlauferhitzer zur Beeinflussung der Temperatur des verwendeten Stellmediums;

—einem PI-Folgeregler aus den Bauteilen Verstärker V3, Kondensator C1 und den Widerständen R10 bis R13, der die mit Hilfe des Einstellreglers R9 bei idealem Laserzustand eingestellte Temperatur TA des verwendeten Stellmediums über den Thermistor R7 konstant hält;

—einer Temperaturgradientenerfassung im zugehörigen Doppel-T-Profil bspw. über die Thermistoren R3 und R4 mit nachgeschaltetem Verstärker V2 mit über den Widerstand R6 einstellbarem Verstärkungsfaktor, welcher bei Auftreten eines Temperaturgradienten eine definierte Änderung der Temperatur des verwendeten Stellmediums über den PI-Folgeregler durch Veränderung des mittels R9 festgelegten Sollwertes bewirkt;

—einer Laserstrahlvermessung bspw. mit Hilfe von Thermoelementen B1 und B2 mit nachgeschaltetem Verstärker V1 ebenfalls mit einstellbarem Verstärkungsfaktor, über dessen Ausgangssignal bei Auftreten einer sekrechten Lageabweichung des Laserstrahles ober bei einer Änderung der Intensitätsverteilung im Laserstrahl ebenfalls eine definierte Änderung der Temperatur des verwendeten Stellmediums über den P1-Folgeregler in der bereits beschriebenen Form bewirkt, und

—einer Führungsgrößen-Umschaltung aus einem Zeitbaustein K1 mit einem vorgeschalteten Wahlschalter S1 sowie einem zugehörigen Umschaltkontakt K1, 1.

wobei die Schaltungsanordnung so konzipiert ist, daß bei abgeschaltetem Zeitbaustein K1 die Systemregelung sowohl in der Einlaufphase des Lasers nach dem Start, als auch im stationären Zustand über die aus dem Temperaturgradienten gebildete Führungsgröße erfolgt, während bei zugeschaltetem Zeitbaustein K1 die Systemregelung nur in der Einlaufphase vom vorliegenden Temperaturgradienten bestimmt wird und nach Ablauf der am Zeitbaustein K1 eingestellten Zeit mit der Umschaltung des Kontaktes K1, 1 die Systemregelung von der aus der direkten Strahlvermessung gebildeten Führungsgröße übernommen wird.

Die Erfindung soll nachstehend an einem Ausführungsbeispiel näher erläutert werden.

In den zugehörigen Zeichnungen zeigen:

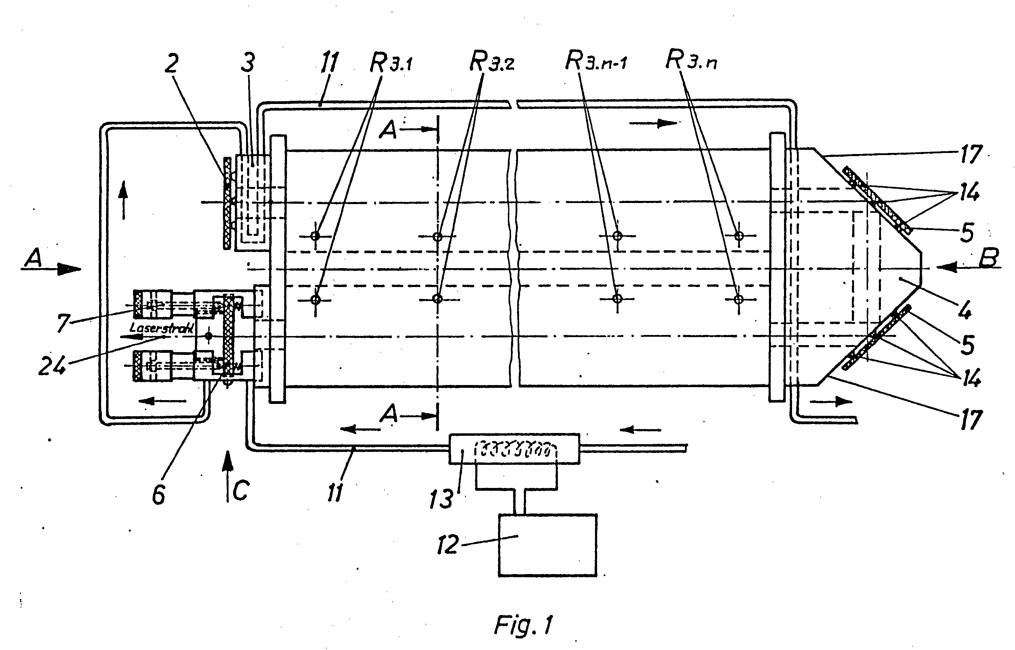

Fig. 1: einen einfachen gefalteten Laserresonator in Draufsicht;

Fig. 2: die Ansicht B gemäß Fig. 1;

Fig. 3: die Ansicht A gemäß Fig. 1;

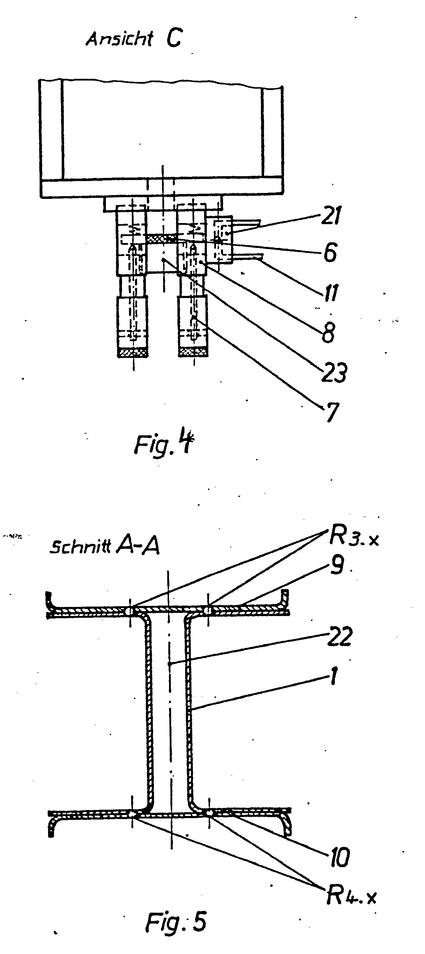

Fig. 4: die Ansicht C gemäß Fig. 1;

Fig. 5: einen Schnitt durch das Doppel-T-Profil des Laserresonators und

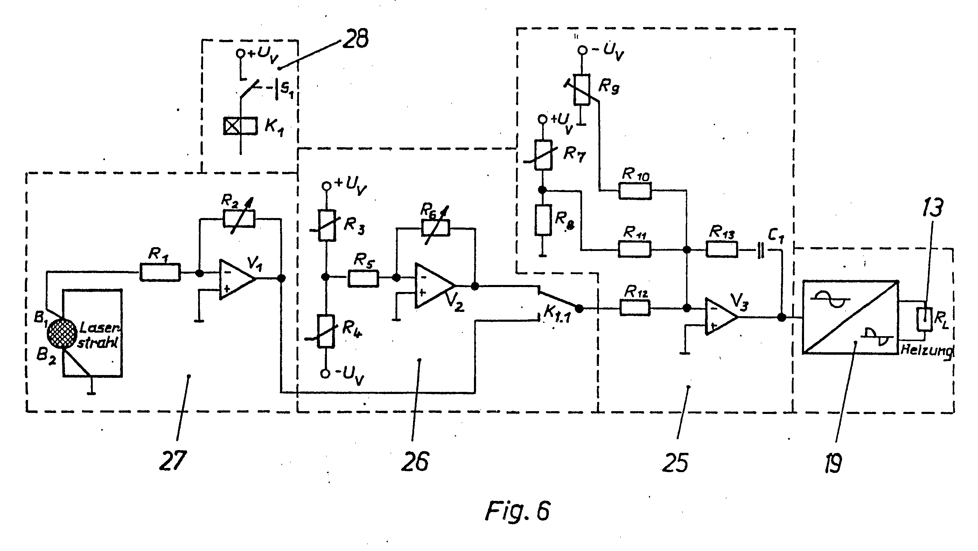

Fig. 6: die Schaltungsanordnung zur Durchführung des Verfahrens gemäß der Erfindung.

Die Trägerkonstruktion für den Laserresonator besteht aus einem Doppel-T-Profil 1 in Leichtbauweise, auf dem die optischen Bauelemente Reflektorspiegel 2 mit Spiegelaufnahme 3, Strahlumlenkprisma 4 mit den zugehörigen Strahlumlenkspiegeln 5 sowie die justierbare Strahlauskopplungsoptik 6 angeordnet sind. Dabei sind die zur Verstellung der Strahlauskopplungsoptik 6 dienenden Mikrometerschrauben 7 in zugehörigen Aufnahmekörpern 8 befestigt. Durch die Aufnahmen der optischen Bauelemente wird eine geeignetes Stellmedium, bspwe. Wasser, über eine zugehörige Leitung 11 geführt und damit die Temperatur der jeweiligen Aufnahmen beeinflußt. Gemäß der Erfindung wird dieses Stellmedium mit Hilfe eines über eine geeignete Regeleinrichtung 12 regelbaren Durchlauferhitzers 13 von einer Vorlauftemperatur TN auf ein definiert höheres Temperaturniveau TA gebracht und als Stellmedium für die Nachregulierung der optischen Bauelemente 2; 5; 6 benutzt. Dazu liegen die optischen Bauelemente jeweils auf einer aus Materialien mit unterschiedlichem Wärmeausdehnungskoeffizienten bestehenden, bei der Ausgangstemperatur TA des Stellmediums genau justierten Dreipunktauflage 14. Bei der Dreipunktauflage 14 des Reflexionsspiegels 2 bilden die aus thermojustierbaren Stiften 15; 16 höchster Präzision bestehenden Auflagepunkte ein vorzugsweise gleichseitiges Dreieck, dessen Basis, die gleichzeitig als Kippachse dient, parallel zur Oberkante des Doppel-T-Profiles 1 verläuft.

Die an den Endpunkten der Kippachse angeordneten Auflagestifte 15 bestehen wie die zugehörige Spiegelaufnahme 3 aus Stahl und sind fest in dieselbe eingepaßt. Der der Kippachse gegenüberliegende, die Nachjustierung bewirkende Stift 16 besteht aus Aluminium und ist demgegenüber in sogenannter Spielpassung in die Spiegelaufnahme 3 eingepaßt und in geeigneter Weise gegen Verdrehung gesichert.

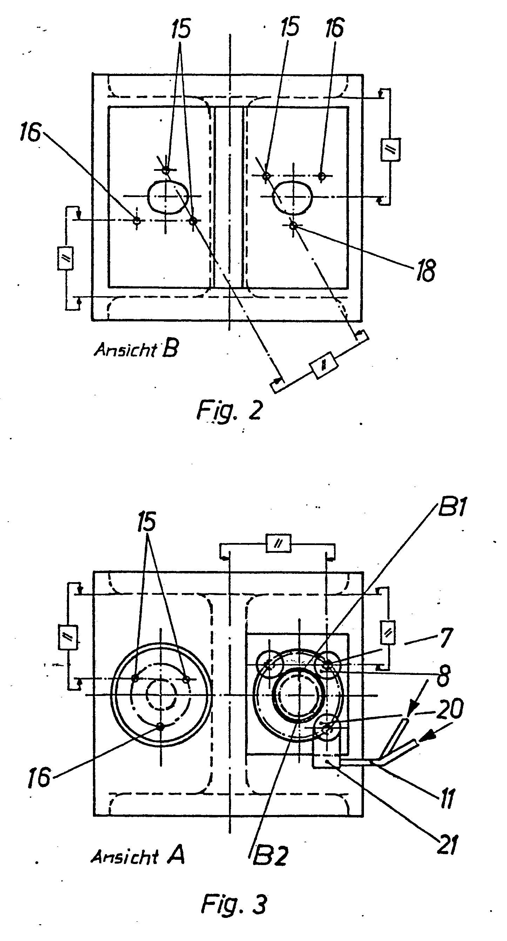

Die Auflagestifte der Dreipunktauflagen 14 für die Umlenkspiegel 5 des Strahlumlenkprismas 4 bilden ebenfalls vorzugsweise ein gleichseitiges Dreieck. Jedoch sind die jeweils zugehörigen Basen zueinander alternativ oben und unten parallel zur Längskante der Strhalumlenkflächen 17 angeordnet, so daß sich beide Dreiecke um 180 Grad gegeneinander verdreht gegenüberstehen. Dabei sind die die Nachjustierung bewirkenden Aluminiumstifte 16 (in der Darstellung gemäß Fig. 3) in linken Dreieck links unten und im rechten Dreieck rechts oben angeordnet, so daß sich für beide Spiegel 5 zwei parallel verlaufende Kippachsen in der dargestellten Form ergeben. Von den restlichen Auflagestiften sind die drei Stifte 16 (aus dem gleichen Material wie das Umlenkprisma) wiederum fest eingepaßt, während der Auflagestift 18 zur Kompensation einer senkrechten Dejustierung bspw. aus Messing besteht und ebenfalls in Spielpassung eingepaßt ist.

Zur Justierung der Strahlungsauskopplungsoptik 6 dienen die Mikrometerschrauben 7; 20, die in zugehörigen Aufnahmekörpern 8; 21 aus Materialien mit unterschiedlichem Warmeausdehnungskoeffizienten eingesetzt sind. Dabei bilden die Mikrometerschrauben einen rechten Winkel, dessen einer Schenkel senkrecht und dessen anderer Schenkel parallel zur Überkante des Doppel-T-Profiles 1 verläuft. Beide Schenkel dienen dabei als Kippachsen für die senkrechte bzw. waagerechte Nachjustierung, wobei insbesondere zur senkrechten Nachjustierung der Aufnahmekörper 21 zur Aufnahme der Mikrometerschraube 20 für die senkrechte Nachjustierung, die am Endpunkt des senkrecht verlaufenden Schenkels liegt, vom verwendeten Stellmedium durchflossen wird.

Zur Erfassung von durch Klima- bzw, Temperaturveränderungen verursachten Temperaturgradienten im Doppel-T-Profil 1 werden im vorliegenden Ausführungsbeispiel Thermistorenpaare R3.n bis R3.b an der oberen Deckfläche 9 und entsprechende Thermistorenpaare R4.1 bis R4.n an der unteren Deckfläche 10 des Doppel-T-Profiles 1 symmetrisch zur Trägermittelachse 22 über die gesamte Profillänge in regelmäßigen Abständen angeordnet. Zur Meßwerterfassung werden die Reihenschaltungen aller oberen Thermistoren R3.1 bis R3.n und aller unteren Thermistoren R4.1 bis R4.n gegeneinander geschaltet, wobei die Schaltung so abgeglichen wird, daß sie bei ideal justiertem Laser und bei der Temperatur TA des verwendeten Stellmediums das Differenzsignal Null liefert, während bei einem vorliegenden Temperaturgradienten die Differenz der Meßsignale aus den beiden Reihenschaltungen R3 und R4 ein Maß für den jeweils vorliegenden Temperaturgradienten darstellt.

Zur Erfassung vorliegender Laser-Dejustierungen im stationären Betrieb des Lasers werden in Strahlrichtung hinter der Strahlauskopplungsoptik 6 zwei Thermoelemente B1 und B2 oberhalb und unterhalb des Laserstrahles 24 mit Hilfe eines Aufnahmekörpers 23 angeordnet und gegensinnig so in Reihe geschaltet, daß bei ideal justiertem Laser ein Differenzsignal Null geliefert wird, während sowohl bei senkrechter Abweichung des Laserstrahles 24, als auch bei Änderung der Intensitätsverteilung im Laserstrahl 24 ein Differenzsignal entsteht, dessen zugeordnete Polarität ein Maß für die vorliegende senkrechte Dejustierungsrichtung und dessen Größe ein maß für den vorliegenden Dejustierungsgrad darstellt.

Die Schaltungsanordnung zur Realisierung der Temperaturregelung des verwendeten Stellmediums besteht aus einem Thyristorsteller 19 mit nachgeschaltetem Durchlauferhitzer 13. Der Thyristorsteller 19 wird dabei vom PI-Folgeregler 25 angesteuert, der aus den Bauelementen Verstärker V3, Kondensator C1 und den Widerständen R10 bis R13 besteht und der die mit Hilfe des Einstellreglers R9 bei idealem Laserzustand eingestellte Temperatur TA über den Thermistor R7 konstant hält. Die Erfassung des Temperaturgradienten im Doppel-T-Profil 1 erfolgt über den Schaltungsteil 26 über die Reihenschaltungen der Thermistoren R3.1 bis R3.n bzw. R4.1 bis R4.n, deren gemittelte Werte über den Widerstand R5 und den Verstärker V2 an den Eingang des PI-Folgereglers 25 geführt werden. Dabei wird der Verstärkungsfaktor, der bei Auftreten eines Temperaturgradienten eine definierte Änderung der Temperatur des verwendeten Stellmediums bewirkt, über den Widerstand R6 eingestellt.

Die Laserstrahlvermessung erfolgt über den Schaltungsteil 27 mit Hilfe der Thermoelemente B1 und B2 mit nachgeschaltetem Verstärker Vi, dessen Verstärkungsfaktor über den Widerstand R2 eingestellt wird. Bei Auftreten einer senkrechten Lageabweichung des Laserstrahles 24 ober bei einer Änderung der Intensitätsverteilung im Laserstrahl 24 liefert der Verstärker V1 ein normiertes Signal, das zur Ansteuerung des PI-Folgereglers 25 verwendet werden kann. Schließlich weist die Schaltungsanordnung noch eine Führungsgrößenumschaltung 28 auf, die aus einem Zeitbaustein K1 mit vorgeschaltetem Wahlschalter S1 sowie einem zugehörigen Umschaltkontakt K1.1 besteht. Dabei ist die Schaltung so konzipiert, daß bei abgeschaltetem Zeitbaustein K1 die Systemregelung sowohl in der Einlaufphase des Lasers nach dem Start, als auch im stationären Zustand über die aus dem Temperaturgradienten gebildete Führungsgröße erfolgt, während bei zugeschaltetem Zeitbaustein K1 die Systemregelung nur in der Einlaufphase vom vorliegenden Temperaturgradienten bestimmt wird und nach Ablauf der am Zeitbaustein K1 eingestellten Zeit mit der Umschaltung des Kontaktes K1.1 die Systemregelung von der aus der direkten Strahlerfassung gebildeten Führungsgröße übernommen wird.

## Patentansprüche

1. Verfahren zur Kompensation von betriebs- und/oder umweltbedingten Dejustierungen von Laserresonatoren in gefalteter Anordnung unter Verwendung einer Trägerkonstruktion für den Resonator in Form eines in Leichtbauweise ausgeführten, vorzugsweise senkrecht angeordneten Doppel-T-Profiles (1), dadurch gekennzeichnet, daß das durch die Halterungen bzw. Aufnahmen aller optischen Bauelemente (2, 5, 6), an sich zur Wärmestabilisierung diendende Medium z.B. Wasser oder Öl, von einer Vorlauf- bzw. Normaltemperatur TN auf ein definiert höheres Temperaturniveau TA gebracht und als Stellmedium für die optischen Bauelemente ausgenutzt wird, wobei die optischen Bauelemente jeweils auf einer aus Materialien mit unterschiedlichem Wärmeausdehnungskoeffizienten bestehenden, bei der Ausgangstemperatur TA des Stellmediums justierten Dreipunktauflage (14) angeordnet sind, und wobei die auftretenden Dejustierungen und/oder die die Dejustierungen verursachenden Faktoren, insbesondere im Doppel-T-Profil der Resonatorkonstruktion auftretende Temperaturgradienten, sowohl in der Einlaufphase des Lasers nach dem Start, als auch im stationären Betrieb in geeigneter Form erfaßt, über eine geeignete Regeleinrichtung (12) ausgewertet und als Führungsgröße für die Temperatur des Stellmediums definiert werden, derart, daß die Temperatur des Stellmediums ausgehend von einem von der Temperatur TA bestimmten Arbeitspunkt je nach der vorliegenden Dejustierungsrichtung erhöht oder vermindert wird, so daß bei auftretenden Dejustierungen und der daraus folgenden definierten Änderung der Temperatur des durch die jeweiligen Aufnahmen Fließenden Stellmediums durch die unterschiedliche Längenausdehnung der jeweiligen Dreipunktauflagen die Position aller optischen Bauelemente im erforderlichen Umfang nachgestellt und die jeweils vorliegende Dejustierung mit hoher Genauigkeit kompensiert wird.

2. Einrichtung zur Durchführung des Verfahrens nach Anspruch 1, dadurch gekennzeichnet, daß die Dreipunktauflage (14) für die optischen Bauelemente (2), die nicht in Umlenkprismen angeordnet sind, ein vorzugsweise gleichseitiges Dreieck bildet, das so angeordnet ist, daß die Basis des Dreiecks, die gleichzeitig als Kippachse dient, waagerecht und parallel zur Ober- bzw. Unterkante des Doppel-T-Profiles (1) verläuft und daß die Dreipunktauflage (14) aus thermojustierbaren Stiften (15, 16) höchster Präzision aus Materialien mit unterschiedlichem Wärmeausdehnungskoeffizienten mit definierten Abmessungen besteht, wobei die die Nachjustierung bewirkenden Stifte in sogenannter Spielpassung in ihre Halterungen (3) eingepaßt und in geeigneter Weise gegen Verdrehung gesichert sind, während die jeweils restlichen Auflagestifte, die aus dem gleichen Material wie die Aufnahmen für die optischen Bauelemente bestehen, fest eingepaßt sind und wobei die die Nachjustierung bewirkenden Stifte der jeweiligen waagerechten Kippachse gegenüber liegen und zwar ober oder unten in Abhängigkeit davon, ob der Wärmeausdehnungskoeffizient des jeweiligen Stiftes kleiner oder größer als der der fest eingepaßten Stifte ist.

3. Einrichtung zur Durchführung des Verfahrens nach Anspruch 1, dadurch gekennzeichnet, daß zur Kompensation temperatur- bzw. klimabedingter Änderungen des Strahlumlenkwinkels der zur Faltung des Laserstrahles erforderlichen Strahlumlenkprismen (4) die an den zugehörigen Strahlumlenkflächen (17) angeordneten, genau justierten Spiegel (5) ebenfalls auf einer Dreipunktauflage (14) aus Stiften mit unterschiedliches Wärmeausdehnungskoeffizienten aufliegen, wobei die Dreipunktauflagen (14) ebbenfalls vorzugsweise jeweils gleichseitige Dreiecke bilden, deren jeweils zugehörigen Basen zueinander alternativ oben ader unten parallel zur Längskante der Strahlumlenkflächen (17) verlaufen, so daß sich beide Dreiecke um 180 Grad gegeneinander verdreht gegenüberstehen, und wobei zur Korrektur des Strahlumlenkwinkels die die Nachjustierung bewirkenden, ebenfalls in Spielpassung eingesetzten Stifte in Abhängigkeit von der jeweils vorliegenden Relation der Wärmeausdehnungskoeffizienten paarweise entweder an den äußeren oder inneren Basispunkten der zugehörigen Dreiecke angeordnet werden, so daß sich auf beiden Seiten zwei parallel verlaufende Kippachsen mit einem Winkel von vorzugsweise 30 Grad zur Achse des Strahlumlenkprismas ergeben, wobei mit der definierten Änderung der Temperatur des Stellmediums, z.B. Wasser, neben der genauen Nachjustierung des Strahlumlenkwinkels auch der bei nur einseitiger Verstellung auftretende Höhenfehler durch die mit der Korrektur verbundene, gleichgroße, jedoch gegenläufige Höhenverstellung beider Spiegel voll ausgeglichen wird, während bei einer gleichzeitigen, klimabedingten Kippung des gesamten Strahlumlenkprismas (4) am Resonator bei horizontaler Anordnung des Strahlumlenkprismas, die eine vertikale, Dejustierung des Lasers verursachen würde, einer der den Basen der vorliegenden Dreiecke gegenüber liegenden Stifte ebenfalls in Spielpassung aus einem Material mit einem gegenüber den beiden anderen Stiften unterschiedlichen Wärmeausdehnungskoeffizienten angeordnet wird und durch die angeführte, definierte Temperaturänderung des Stellmediums die aufgetretene Höhenabweichung gleichlaufend ausreichend kompensiert.

4. Einrichtung zur Durchführung des Verfahrens nach Anspruch 1, dadurch gekennzeichnet, daß die am Resonator angeordnete Strahlungsauskopplungsoptik (6) mittels drei geeigneter Justierschrauben (7) z.B. Mikrometerschrauben, waagerecht und/oder senkrecht eingestellt werden kann, wobei diese Justierschrauben (7), die in aufnahmekörpern (8) aus Materialien mit unterschiedlichem Wärmeausdehnungskoeffizienten eingesetzt sind, einen rechten Winkel bilden, dessen einer Schenkel senkrecht und dessen anderer Schenkel parallel zur Ober- bzw. Unterkante des Doppel-T-Trägers verläuft und beide Schenkel als Kippachsen für die waagerechte bzw. senkrechte Nachjustierung dienen, derart, daß der Aufnahmekörper (21) zur Aufnahme der Justierschraube (20) zur senkrechten Justierung, der am Endpunkt des senkrecht verlaufenden Schenkels liegt, vom verwendeten Stellmedium, z.B. Wasser, durchflossen wird und mit der Temperaturänderung des Stellmediums in erster Linie klimabedingte, senkrechte Dejustierungen ausgleicht, während die beiden anderen Aufnahmen ebenfalls einen unterschiedlichen Wärmeausdehnungskoeffizienten zueinander aufweisen können, ohne jedoch vom Stellmedium durchflossen zu werden, so daß durch Raumtemperaturänderungen eventuell verursachte, geringfügige seitliche Dejustierungen gleichfalls seblsttätig ausgeglichen werden.

5. Einrichtung nach Anspruch 4, dadurch gekennzeichnet, daß zur Erfassung von durch klima- und/oder betriebsbedingten Temperaturveränderungen verursachten Temperaturgradienten im Doppel-T-Profil (1) der Resonatorkonstruktion, sowohl in der Einfahrphase des Lasers nach dem Start, als auch im stationären Betrieb, geeignete Meßfühler, z.B. Thermistoren (R3, R4) an der oberen und der unteren Deckfläche (9; 10) des Doppel-T-Profiles (1) angeordnet werden, und zwar zur Erfassung eines auftretenden senkrechten Temperaturgradienten mindestens je ein Meßfühler oben und unten, oder ein Meßfühlerpaar oben und unten symmetrisch zur Trägermittelachse bzw. zur zusätzlichen Erfassung eines gegebenenfalls außerdem vorliegenden waagerechten Temperaturgradienten in Längsrichtung des Trägers mindestens ein weiteres Meßfühlerpaar in entsprechender Entfernung oben und unten, ebenfalls symmetrisch zur Trägermittelachse, wobei zur Auswertung die oberen bzw. unteren Meßfühler so abgeglichen werden, daß sie bei ideal justiertem Laser bei der Temperatur TA des Stellmediums, z.B. Wasser, das Differenzsignal Null liefern, während bei vorliegendem Temperaturgradienten im Doppel-T-Profil der Resonatorkonstruktion die Differenz der Meßsignale aus dem oberen und unteren Meßfühler bzw. aus der Reihenschaltung der oberen und unteren Meßfühler ein Maß für den jeweils vorliegenden Temperaturgradienten im Doppel-T-Profil darstellt und als Führungsgröße für die Temperatur des Stellmediums definiert wird.

6. Einrichtung zur Durchführung des Verfahrens nach Anspruch 1, dadurch gekennzeichnet, daß zur direkten Erfassung vorliegender Laserdejustierungen im stationären Betrieb an der Strahlungsauskopplungsoptik (6) zwei geeignete Meßfühler, vorzugsweise Thermoelemente (31; 32), am Umfang oberhalb und unterhalb des Laserstrahles (24) senkrecht übereinander angeordnete und gegensinnig so in Reihe geschaltet sind, daß bei ideal justiertem Laser ein Differenzsignal Null geliefert wird, während sowohl bei senkrechter Abweichung des Laserstrahles (24), als auch bei Änderung der Intensitätsverteilung im Laserstrahl (24) ein Differenzsignal entsteht, dessen zugeordnete Polarität ein Maß für die vorliegende senkrechte Dejustierungsrichtung und dessen Größe ein Maß für den vorliegenden Dejustierungsgrad darstellt, und das gleichfalls als Füllungsgröße für die Temperatur des verwendeten Stellmediums dienen kann.

7. Einrichtung nach Anspruch 5 und 6, dadurch gekennzeichnet, daß sie eine Schaltungsanordnung aufweist, die aus den folgenden Baugruppen besteht:

—einem Thyristorsteller (19) mit nachgeschaltetem Durchlauferhitzer (13) zur Beeinflussung der Temperatur des verwendeten Stellmediums;

—einem PI-Folgeregler (25) aus dan Bauteilen Verstärker (V3), Kondensator (C1) und Widerständen (R10 bis R13), der die mit Hilfe eines Einstellreglers (R9) bei idealem Laserzustand eingestellte Temperatur TA des verwendeten Stellmediums über einen Thermistor (R7) konstant hält;

—einer Temperaturgradientenerfassung (26) im zugehörigen Doppel-T-Profil (1) über Thermistoren (R3 und R4) nachgeschaltetem Verstärker (V2) mit über einen Widerstand (R6) einstellbarem Verstärkungsfaktor, welcher bei Auftreten eines Temperaturgradienten eine definierte Änderung der Temperatur des verwendeten Stellmediums über den PI-Folgeregler durch Veränderung des Mittels des Einstellreglers (R9) festgelegten Sollwertes bewirkt;

—einer Laserstrahlvermessung (27) mit Hilfe von Thermoelementen (B1) und (B2) mit nachgeschaltetem Verstärker (V1) ebenfalls mit einstellbarem Verstärkungsfaktor, über dessen Ausgangssignal bei Auftreten einer senkrechten Lageabweichung des Laserstrahles oder bei einer Änderung der Intensitätsverteilung im Laserstrahl ebenfalls eine definierte Änderung der Temperatur des verwendeten Stellmediums über den PI-Folgeregler in der bereits beschriebenen Form bewirkt, und

—einer Führungsgrößen-Umschaltung (28) aus einem Zeitbaustein (K1) mit einem vorgeschalteten Wahlschalter (S1) sowie einem zugehörigen Umschaltkontakt (K1, 1),

wobei die Schaltungsanordnung so konzipiert ist, daß bei abgeschaltetem Zeitbaustein (K1) die Systemregelung sowohl in der Einschaltphase des Lasers nach dem Start, als auch im stationären Zustand über die aus dem Temperaturgradienten gebildete Führungsgröße erfolgt, während bei zugeschaltetem Zeitbaustein (K1) die Systemregelung nur in der Einlaufphase vom vorliegenden Temperaturgradienten bestimmt wird und nach Ablauf der am Zeitbaustein (K1) eingestellten Zeit mit der Umschaltung des Umschalt kontaktes (K1, 1) die Systemregelung von der aus der direkten Strahlerfassung gebildeten Führungsgröße übernommen wird.

**Revendications**

1. Procédé de compensation des défauts d'ajustement ou de mise au point dûs au fonctionnement et à l'environnement de résonateurs ou cavités de résonance pour laser en configuration non rectiligne utilisant une charpente pour le support du résonateur réalisée en profilé en forme de double T (1) en construction allégée, de préférence disposée verticalement, caractérisé en ce que, dans le but de compenser les défauts de réglage du résonateur laser causés par son fonctionnement et par les variations des conditions ambiantes, le fluide (que ce soit, par exemple, de l'eau ou de l'huile) qui traverse les supports ou les organes de fixation des différents éléments (2, 5, 6) du montage optique et qui sert à la stabilisation thermique de l'ensemble, est amené à un niveau supérieur de température TA à partir d'une température de mise en service ou de la température ordinaire et en ce que ce même fluide est utilisé comme fluide permettant la mise au points des éléments du montage optique, procédé caractérisé en ce que les composants du montage optique sont mis en place pour occuper une configuration triangulaire (14) en matériaux de coefficients de dilatation thermique différents, configuration dont le réglage est réalisé avec précision à la température TA à la sortie de la circulation de fluide de réglage, et en ce que les défauts de mise au point et les paramètres de fonctionnement qui pourraient être à l'origine de tels défauts, notamment les gradients de température qui seraient susceptibles de se produire sur la longueur du profilé en forme de double T du support du résonateur sont, tant lors de l'amorçage du laser après son démarrage qu'en cours de fonctionnement stationnaire, détectés de façon appropriée, évalués au moyen d'un système régulateur (12) adéquat et fixés pour définir les paramètres de référence du milieu utilisé pour le réglage, le tout produisant en fait une hausse ou une baisse de la température du milieu utilisé pour le réglage qui la fait dériver par rapport à la température TA correspondant au point où l'on travaille, la dérive ayant lieu dans un sens ou dans l'autre selon le type de défaut de mise au point, l'ensemble étant tel que lorsqu'un défaut de mise au point survient, une variation de température en résulte au sein du milieu liquide de réglage parcourant les divers éléments de support et de fixation, procédé de plus caractérisé en ce que la position de tous les éléments optiques subit le réajustement indispensable créé par la différence entre la dilatation thermique de chacun des composants de la configuration triangulaire et finalement en ce que les différents défauts de mise au point sont compensés de la sorte avec une haute précision.

2. Dispositif pour la mise en oeuvre du procédé selon la revendication 1, caractérisé en ce que les différents éléments (12) optiques occupant une configuration triangulaire (14) et qui ne sont pas disposés comme des prismes de déflexion, sont mis en place en une disposition en triangle de préférence équilatéral, le triangle ou les supports ou chevilles de positionnement formant les sommets de ce triangle ayant une telle disposition que la base du triangle, qui sert aussi d'axe de basculement, est disposée horizontalement et parallèle aux faces supérieure et inférieure du profilé en forme de double T (1), le dispositif est caractérisé aussi en ce que les supports de positionnement (14) appartenant à la configuration triangulaire sont constitués de chevilles (15, 16) réglables thermiquement, avec très haute précision, chevilles qui présentent des dimensions bien définies et sont en des matériaux de coefficients de dilatation thermique différents, les chevilles rendant la correction de réglage possible sont logées chacune dans leur organe de fixation (3) et y sont ajustées tout en présentant un certain jeu et étant bloquées adéquatement contre toute éventuelle possibilité de rotation tandis que les autres chevilles qui sont faites dans le même matériau que les organes de fixation des composants optiques et sont, chacune, fixées à demeure; le dispositif est finalement caractérisé en ce que l'emplacement des chevilles de positionnement est conçu de telle façon que certaines soient aménagées avec un certain jeu et soient situées en face de leur propre axe de basculement dont les extrémités sont constituées par les chevilles aménagées sans jeu par rapport à ces dernières, les chevilles de positionnement se mettant en place les unes au-dessus ou en-dessous des autres selon que leur coefficient propre de dilatation est plus petit ou plus grand que celui des chevilles à positionnement fixe.

3. Dispositif pour la mise en oeuvre du procédé selon la revendication 1, caractérisé en ce que pour réaliser la compensation des déviations d'origine thermique de l'angle de déflexion du rayonnement, angle causé par la présence des prismes déflecteurs indispensables à la déflexion du rayonnement laser, on dispose, sur les différentes surfaces de déviation inhérentes au système, des miroirs (5) dont la position est exactement mise au point en des logements de fixation de configuration triangulaire, logement faits de chevilles de coefficients de dilatation thermique différents et en ce que les fixations triangulaires ou logements (14) de fixation à trois points forment de préférence des triangles équilatéraux dont les bases correspondantes sont situées parallèles aux différentes surfaces longitudinales faisant partie de l'ensemble des surfaces de déflexion du rayonnement laser de manière telle que les deux triangles en question soient en face l'un en face de l'autre superposables l'un à l'autre par une rotation de 180°, dispositif caractérisé de plus en ce que pour réaliser la correction de l'angle de déflexion du rayonnement laser, les chevilles permettant de redéfinir la mise au point sont disposées par couple soit aux points de base extérieurs soit aux points de base intérieurs des triangles correspondants selon la relation qui existe entre les coefficients de dilatation thermique des différentes chevilles; de cette disposition il résulte de part et d'autre deux axes de basculement parallèles qui, de préférence, forment un angle de 30° avec l'axe du prisme de déflexion du rayonnement. Le dispositif est encore caractérisé en ce qu'il permet de réaliser la compensation exacte non seulement des défauts de mise au point de l'angle de déflexion du rayonnement, en agissant sur la température du fluide de réglage définie au départ, mais également la compensation de l'erreur en hauteur qui a lieu lors de l'ajustement latéral, cette dernière compensation étant totalement réalisée par un déplacement, fonction de la correction à apporter, approximativement identique, dans la direction de la hauter, mais en sens opposé, des deux miroirs; lors d'un basculement simultané de tout le prisme de déflexion du rayonnement laser (4) dans le montage du résonateur, à cause de circonstances liées au climat, qui aurait occasionné un défaut de mise au point vertical du laser, ou défaut d'une disposition horizontale du prisme de déflexion de rayonnement, une des chevilles qui est située à l'opposé des triangles présents est mise en oeuvre pour le réajustement, cette cheville étant faite en un matériau ayant un coefficient de dilatation thermique différent des deux autres chevilles et présentant également, dans son logement de fixation, du jeu, du manière que la différence de hauter est simultanément et suffisamment compensée par la variation de la température du fluide de réglage, variation qui est elle-même fonction de la correction angulaire à apporter.

4. Dispositif pour la mise en oeuvre du procédé selon la revendication 1, caractérisé en ce que, pour assurer à nouveau la mise au point du montage optique (6) assurant la sortie du rayonnement laser du résonateur, on emploie au départ trois vis d'ajustement (7) adaptées, par exemple, des vis micrométriques, ces vis d'adjustement étant insérées dans des logements (8) en matériaux de coefficients de dilatation thermique différents, et formant un angle droit dont un côté ou une branche est perpendiculaire et l'autre est parallèle aux faces supérieure ou inférieure du profilé de portée ayant la forme d'un double T de telle sorte que les deux branches soient employées comme axes de basculement pour le réajustement horizontal ou le réajustement vertical; le dispositif est aussi caractérisé en ce que le logement (21) pour la vis d'ajustement (20) relative à la verticalité, qui est aménagé à l'extrémité de la branche verticale est parcouru par le fluide de régulation, par exemple par de l'eau, et en ce que le changement de la température du fluide de réglage permet, avant tout, de compenser les défauts d'ajustement dans le sens vertical et dûs aux conditions climatiques; le dispositif est caractérisé aussi en ce que les deux autres logements de fixation se présentent également en un matériau ayant un coefficient de dilatation thermique différent dans toutefois, quant à eux, qu'un fluide de régulation ne les parcoure, ces caractéristiques techniques permettant une compensation automatique des minimes défauts d'ajustement latéral causés par un changement de la température ambiante.

5. Dispositif selon la revendication 4, caractérisé en ce que, dans le but de saisir les données relatives aux gradients de température qui sont la conséquence des variations climatiques et des conditions opératoires et qui se présentent dans la charpente au profil en forme de double T (1) faisant partie du résonateur, on a mis en place aux surfaces de fermeture supérieure et inférieure du profilé en forme de double T, une série de capteurs adéquats, par exemple des thermistors, la saisie de données pouvant se faire aussi bien dans la phase d'amorçage après le démarrage du laser qu'en service stationnaire; le dispositif est de plus caractérisé en ce que pour saisir les données relatives à un gradient de température vertical, on dispose au moins un capteur sur le dessus et un autre sur le dessous de la construction ou un couple de capteurs supérieur et inférieur, symétriques par rapport à l'axe médian du support à profil en forme de double T, et en ce que pour la saisie supplémentaire éventuelle d'un gradient de température épousant la forme longitudinale du profilé, on envisage un couple de capteurs additionnels supérieur et inférieur à une distance appropriée, également symétriques par rapport à l'axe médian du profilé. Le dispositif est encore caractérisé en ce que pour obtenir une évaluation correcte, on met les capteurs supérieur et inférieur en correspondance de manière à ce que, quand la mise au point est parfaite, et que la température du liquide régulateur, par exemple, est TA, le signal différentiel qu'ils délivrent est égal à zéro, et en ce que, quand la différence des signaux des capteurs supérieur et inférieur du circuit des capteurs branchés en série de capteurs supérieur et du circuit inférieur existe, elle représente une mesure des gradients de température respectifs dans le profilé en forme de double T et elle est définie comme grandeur de référence pour la température du fluide de réglage.

6. Dispositif pour la mise en oeuvre du procédé selon la revendication, 1, caractérisé en ce qu'aux fins de détection directe des défauts d'alignement du laser au cours d'une opération en continu, on dispose deux capteurs adéquats, de préférence, des thermocouples (31, 32) au pourtour du montage optique de sortie (6) du rayonnement laser, à la verticale, au-dessus et en-dessous du rayonnement laser (24) et l'on raccorde les thermocouples en série et en ce qu'également, de cette façon, un signal de différence soit affiché quand l'ajustement du dispositif producteur de rayonnement laser (24) est bon. Le dispositif est encore caractérisé en ce que, lors d'un changement de la distribution d'intensité dans le faisceau laser, un signal différentiel est créé auquel est associée une polarité qui est une mesure de la direction du défaut de mise au point et dont la grandeur est une mesure du niveau de ce défaut, le signal de différence dont il est question pouvant également servir de grandeur de référence pour la température du fluide régulateur employé.

7. Dispositif selon la revendication 5 ou la revendication 6, caractérisé en ce que la disposition des circuits pour la mise en oeuvre du procédé selon l'invention comporte un ensemble de circuits composé des parties de circuits qui suivent:

—une thyristor de réglage (9) avec chauffe-eau instantané branché en aval de manière à agir sur la température du fluide de réglage utilisé;

—un régulateur PI (25) constitué des éléments d'amplification (V3), d'un condensateur (C1) et de résistances (R10 à R13), lequel régulateur maintient à une valeur constante la température TA du fluide de régulation utilisé, le régulateur PI fonctionnant à l'aide d'un autre régulateur de mise au point (R9) pour que, à l'état idéal de fonctionnement du laser, la température TA reste constante grâce au thermistor (R7);

—un organe de saisie des données (26) relatives au gradient de température dans le profilé en forme de double T (1), comportant des thermistors (R3 et R4) avec un amplificateur (V2) annexe, présentant de plus un facteur de multiplication adjustable à l'aide d'une résistance (R6) réalisant, en cas d'existence d'un gradient de température, un changement défini de la température du fluide de réglage utilisé sous l'action du régulateur PI par variation de la valeur de consigne fixée par le régulateur de mise au point (R9);

—un appareil de mesure (27) du rayonnement laser à l'aide de thermocouples (B1, B2) suivis d'un amplificateur (V1) dont le facteur de multiplication est également réglable, et dont le signal de sortie provoque une variation nette de la température du fluide de réglage utilisé, sous l'action du régulateur PI, dans la forme décrite, en cas de défaut de mise au point verticale ou en cas d'un changement de la distribution d'intensité émise par le laser; et

—un commutateur de grandeur de référence (28) dans lequel un organe de temporisation (K1) est incorporé et qui est précédé d'un commutateur sélectif (S1) auquel est associé un contacteur d'enclenchement ou de mise hors circuit;

la conception du circuit étant basée sur le fait que, quand l'organe de temporisation (K1) est hors service, la régulation du système est effectuée aussi bien lors de l'amorçage du rayonnement laser après le démarrage, qu'à l'état stationnaire de fonctionnement; ceci étant réalisé grâce à la grandeur de référence basée sur le gradient de température; cependant, lorsque l'organe de temporisation (K1) est branché, seul le gradient de température au cours de la phase d'amorçage et après le temps fixé par l'organe de temporisation K1, détermine la régulation du système. Le dispositif se caractérise aussi, finalement, en ce que cette régulation est ensuite prolongée au moyen de la grandeur de référence formée sur base de la mesure du faisceau direct par action du commutateur (K1.1).

**Claims**

1. Process for the compensation of operationally and/or environmentally caused disadjustments of laser resonators in a folded arrangement using a carrier constructon for the resonator in the form of a double T profile (1) which is designed as a light-weight construction and which is preferably disposed vertically, characterized in that the medium e.g. water or oil, serving through the holders or mountings of all optical components (2, 5, 6) per se for thermal stabilization, is brought from a preliminary running or normal temperature TN to a temperature level TA which is defined to be higher and is utilized as setting medium for the optical components, the optical components being disposed in each instance on a three-point contact arrangement (14) which consists of materials having differing coefficients of thermal expansion and which is adjusted at the initial temperature TA of the setting medium, and the occurring disadjustments and/or the factors causing the disadjustments, especially temperature gradients occurring in the double T profile of the resonator construction, are detected both in the running-in phase of the laser after the start and also in steady-state operation in an appropriate form, are evaluated by means of an appropriate regulating device (12) and are defined as a control variable for the temperature of the setting medium, in such a manner that the temperature of the setting medium is increased or reduced, starting from an operating point determined by the temperature TA, as a function of the disadjustment direction which is applicable, so that, in the event of the occurrence of disadjustments and the defined alteration, consequent thereupon, of the temperature of the setting medium flowing through the respective mountings, as a result of the differing longitudinal expansion of the respective three-point contact arrangements, the position of all optical components is reset to the required extent and the respectively applicable disadjustment is compensated with a high degree of accuracy.

2. Device for carrying out the process according to Claim 1, characterized in that the three-point contact arrangement (14) for the optical components (2), which are not disposed in deflecting prisms, forms a preferably equilateral triangle, which is disposed so that the base of the triangle, which serves at the same time as tilt axis, extends horizontally and parallel to the upper or lower edge of the double T profile (1), and in that the three-point contact arrangement (14) consists of thermally adjustable pins (15, 16) of highest precision consisting of materials having differing coefficients of thermal expansion with defined dimensions, the pins effecting the readjustment being fitted into their holders (3) in a so-called clearance fit and being secured against rotation in an appropriate manner, while the respectively remaining contact pins, which consist of the same material as the mountings for the optical components, are fixedly fitted in and the pins effecting the readjustment being disposed opposite the respective horizontal tilt axis, and specifically above or below in dependence upon whether the coefficient of thermal expansion of the respective pin is smaller or greater than that of the pins which are fixedly fitted in.

3. Device for carrying out the process according to Claim 1, characterized in that in order to compensate changes, caused by temperature or climate, in the beam deflection angle of the beam deflection prisms (4) required for the folding of the laser beam, the accurately adjusted mirrors (5), which are disposed at the associated beam deflection surfaces (17), likewise rest on a three-point contact arrangement (14) consisting of pins having differing coefficients of thermal expansion, the three-point contact arrangements (14) likewise forming preferably respectively equilateral triangles, the respectively associated bases of which extend, alternately in relation to one another, above or below, parallel to the longitudinal edge of the beam deflection surfaces (17), so that the two triangles stand opposite, rotated through 180° in relation to one another, and in order to correct the beam deflection angle, the pins effecting the readjustment, which are likewise used in a clearance fit, are disposed, in dependence upon the respectively applicable relation of the coefficients of thermal expansion, pairwise either at the outer or inner base points of the associated triangles, so that on both sides two tilt axes extending parallel are formed with an angle of preferably 30 degrees to the axis of the beam deflection prism, with the defined alteration of the temperature of the setting medium, e.g. water, in addition to the accurate readjustment of the beam deflection angle, the height error occurring in the event of only unilateral displacement also being fully compensated by the equal-magnitude but oppositely directed height adjustment of both mirrors which is associated with the correction, while in the event of a simultaneous tilting, caused by the climate, of the entire beam deflection prism (4) at the resonator in the case of horizontal arrangement of the beam deflection prism, which arrangement would cause a vertical disadjustment of the laser, one of the pins situated opposite the bases of the existing triangles is disposed likewise in a clearance fit, consisting of a material having a coefficient of thermal expansion different from the other two pins, and the occurring height deviation is sufficiently compensated synchronously by the mentioned, defined change in the temperature of the setting medium.

4. Device for carrying out the process according to Claim 1, characterized in that the optical radiation coupling-out system (6) disposed at the resonator can be set horizontally and/or vertically by means of three appropriate adjusting screws (7), e.g. micrometer screws, these adjusting screws (7), which are inserted in mounting bodies (8) consisting of materials having differing coefficients of thermal expansion, forming a right angle, one of the limbs of which extends vertically and the other limb of which extends parallel to the upper or lower edge of the double T carrier, and both limbs serving as tilt axes for the horizontal and vertical readjustment, in such a manner that the mounting body (21) for the mounting of the adjusting screw (20) for the vertical adjustment, which mounting body is situated at the endpoint of the vertically extending limb, has the setting medium employed, e.g. water, flowing through it and compensates by the change in temperature of the setting medium principally vertical disadjustments caused by the climate, while the other two mountings can likewise exhibit a differing coefficient of thermal expansion in relation to one another, without nevertheless having the setting medium flowing therethrough, so that slight lateral disadjustments which may possibly be caused by changes in room temperature are likewise automatically compensated.

5. Device according to Claim 4, characterized in that, in order to detect temperature gradients caused by temperature changes caused by the climate and/or operationally, in the double T profile (1) of the resonator construction, both in the run-up of the laser after the start and also in steady-state operation, appropriate measurement sensors, e.g. thermistors (R3, R4) are disposed at the upper and the lower covering surface (9; 10) of the double T profile (1), and specifically in order to detect an occurring vertical temperature gradient at least one respective measurement sensor is disposed above and below, or a pair of measurement sensors above and below symmetrically in relation to the central axis of the carrier, of for the additional detection of a possibly also present horizontal temperature gradient in the longitudinal direction of the carrier at least one further pair of measurement sensors is disposed at an appropriate distance above and below, likewise symmetrically in relation to the central axis of the carrier, for evaluation the upper and lower measurement sensors respectively being balanced so that when the laser is ideally adjusted at the temperature TA of the setting medium, e.g. water, they deliver the difference signal zero, while if a temperature gradient is present in the double T profile of the resonator construction the difference of the measurement signals from the upper and lower measurement sensor or from the series circuit of the upper and lower measurement sensors represents a measure of the temperature gradient respectively present in the double T profile and is defined as a control variable for the temperature of the setting medium.

6. Device for carrying out the process according to Claim 1, characterized in that for the direct detection of laser disadjustments present in steady-state operation at the optical radiation coupling-out system (6) two appropriate measurement sensors, preferably thermoelectric elements (31; 32), are disposed at the periphery above and below the laser beam (24) vertically one above the other and are connected oppositely in series so that when the laser is ideally adjusted a zero difference signal is delivered, while both in the case of a vertical deviation of the laser beam (24) amd also in the case of an alteration to the intensity distribution in the laser beam (24) a difference signal is formed, the associated polarity of which represents a measure of the applicable vertical disadjustment direction and the magnitude of which represents a measure of the applicable degree of disadjustment, and which can likewise serve as a loading variable for the temperature of the setting medium employed.

7. Device according to Claims 5 and 6, characterized in that it exhibits a circuit arrangement which consists of the following assemblies:

—a thyristor control device (19) with a downstream continuous flow heater (13) to influence the temperature of the setting medium employed;

—a PI sequence controller (25) consisting of the components amplifier (V3), capacitor (C1) and resistors (R10 to R13), which maintains constant, by means of a thermistor (R7), the temperature TA of the setting medium employed, which temperature is set by means of a setting regulator (R9), when the laser condition is ideal;

—a temperature gradient detection arrangement (26) in the associated double T profile (1) via thermistors (R3 and R4) with a downstream amplifier (V2) having an amplification factor which can be set by means of a resistor (R6), which, in the event of the occurrence of a temperature gradient, effects a defined alteration of the temperature of the setting medium employed, by means of the PI sequence controller, by altering the setpoint value specified by means of the setting regulator (R9);

—a laser beam measuring arrangement (27) using thermoelectric elements (B1) and (B2) with a downstream amplifier (V1), likewise with a settable amplification factor, by means of the output signal of which, in the event of the occurrence of a vertical deviation of the position of the laser beam or in the event of an alteration of the intensity distribution in the laser beam, a defined alteration of the temperature of the setting medium employed is likewise effected by means of the PI sequence controller in the already described manner, and

—a control variable switching arrangement (28) consisting of a timing element (K1) with an upstream selector switch (S1) as well as an associated switching contact (K1, 1),

the circuit arrangement being designed so that when the timing element (K1) is deactivated the regulation of the system takes place both in the activation phase of the laser after the start and also in the steady-state condition, via the control variable formed from the temperature gradient, while when the timing element (K1) is activated the regulation of the system is determined only in the running-in phase by the applicable temperature gradient and after the elapse of the time set on the timing element (K1), on the switching of the switching contact (K1, 1) the regulation of the system is taken over by the control variable formed from the direct radiation detection.

Fig.1

EP 0 120 310 B1

Ansicht B

Fig. 2

Ansicht A

Fig. 3

Ansicht C

Fig. 4

Schnitt A-A

Fig. 5

Fig. 6

EP 0 120 310 B1